# EUROPÄISCHE PATENTSCHRIFT

(11) **EP 2 805 874 B1**
(45) Veröffentlichungstag und Bekanntmachung des Hinweises auf die Patenterteilung: **29.08.2018**
(21) Anmeldenummer: 14001808.6
(22) Anmeldetag: 22.05.2014
(51) Int. Cl.: B62D 21/00, B62D 25/00

(54) **Hohlprofil für eine Trägerstruktur eines Fahrzeugs**
Hollow profile for a support structure of a vehicle
Profilé creux pour une structure porteuse d'un véhicule

(30) Priorität: 24.05.2013 DE 102013008918
(43) Veröffentlichungstag der Anmeldung: 26.11.2014
(73) Patentinhaber: AUDI AG, 85045 Ingolstadt (DE)
(72) Erfinder: Dugnus, Ulrich, DE - 74074 Heilbronn (DE); Urban, Tobias, DE - 74354 Besigheim-Ottmarsheim (DE)
(74) Vertreter: Patzelt, Heike Anna Maria

(56) Entgegenhaltungen:
- DE-A1- 19 741 262
- DE-A1- 19 803 738
- DE-A1-102010 037 459
- DE-U1-202009 011 632

## Beschreibung

Die Erfindung betrifft ein Hohlprofil für eine Trägerstruktur eines Fahrzeugs gemäß dem Oberbegriff des Patentanspruchs 1, dem Oberbegriff des Patentanspruchs 2 und dem Oberbegriff des Patentanspruchs 10.

Die Verwendung von Mehrkammerhohlprofilen als Längs- oder Querträger zur Herstellung von Fahrzeugkarosserien ist bekannt.

So werden Aluminiumhohlprofile mit einer Kammer oder mehreren Kammern als Träger insbesondere im Fahrzeugleichtbau wegen ihrer guten Festigkeits- und Steifigkeitseigenschaften eingesetzt. Weitere Vorteile ergeben sich durch die mögliche Realisierung von Wanddickenvariationen im Querschnitt als auch durch eine freie Flanschgestaltung. In der Regel werden solche Hohlprofile weiteren Umformoperationen, wie beispielsweise Innenhochdruckumformen (IHU) unterzogen. Insbesondere bei der Weiterverarbeitung von Mehrkammerprofilen treten Probleme bei Querschnittsänderungen in der Längs- als auch Querrichtung des Profils auf, da bei solchen plastischen Verformungen der Innensteg bzw. die Innenstege des Mehrkammerprofils derart verändert wird bzw. werden, dass dadurch die Steifigkeit und Festigkeit des Trägers in diesem Bereich vermindert wird.

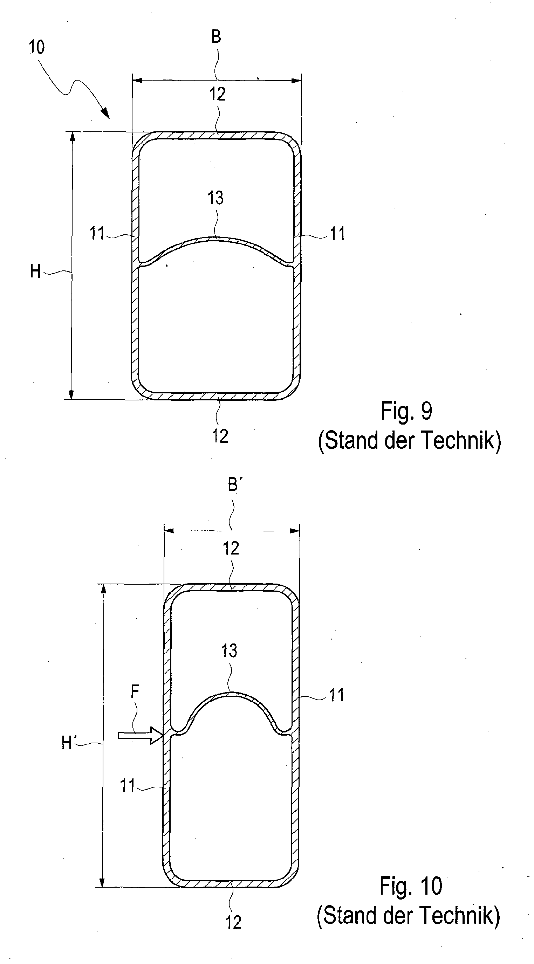

Eine solche Situation zeigen die Figuren 9 und 10. Gemäß Figur 9 ist ein Querschnitt eines als Längsträger ausgebildeten Grundprofils 10 dargestellt, welches nach einer Umformung eines Endabschnittes dieses Grundprofils 10 einen Querschnitt nach Figur 10 aufweist.

Das als Mehrkammerprofil ausgebildete Grundprofil 10 weist nach Figur 9 einen rechteckförmigen Querschnitt mit jeweils zwei gegenüberliegenden Seitenwänden 11 und 12 auf, wobei zur Bildung von zwei Innenkammern ein parallel zu den beiden Seitenwänden 12 verlaufender Innensteg 13 vorgesehen ist, welcher in Richtung einer Seitenwand 12 vorbombiert ist, also eine Wölbung aufweist. Durch die Umformung, bspw. mit Innenhochdruckumformen eines Endabschnittes des Grundprofils 10 wird gegenüber dem Querschnitt mit einer Breite B und einer Höhe H nach Figur 9 ein Querschnitt mit einer verringerten Breite B' und einer verlängerten Höhe H' erzeugt, wie dies in Figur 10 dargestellt ist. Durch die Verringerung der Breite B des Grundprofils 10 wird die Pombierung des Innenstegs 13 verstärkt, so dass die seitliche Abstützwirkung gegenüber einer einwirkenden Kraft F sehr stark verringert wird.

Aus der DE 197 41 262 A1 ist ein gattungsbildendes Hohlprofil bekannt, welches einen zwischen gegenüberliegenden Bereichen der Innenwandung des Hohlprofils verlaufenden Innensteg mit einem Unterbrechungsabschnitt aufweist. Dieser Innensteg besteht aus zwei Teilstegabschnitten, die jeweils an einer gegenüberliegenden Innenwandung angeordnet sind, wobei die freien Enden dieser Teilstegabschnitte den Unterbrechungsabschnitt bilden. Bei einer Biegebeanspruchung des Hohlträgers kommen diese freien Enden der beiden Teilstegabschnitte zur Anlage, wodurch ein Einknicken aufgrund der Biegebeanspruchung zuverlässig verhindert werden soll.

Nachteilig hierbei ist jedoch, dass das einheitliche Hohlprofil einen einheitlichen Querschnitt und die gleiche Festigkeit über die gesamte Länge aufweist.

Ferner ist aus der EP 0 733 539 B1 ein Verfahren zur Herstellung eines Hohlprofils für eine Trägerstruktur eines Kraftfahrzeugs bekannt, bei dem das Hohlprofil zumindest eine Zwischenwand aufweist. Dieses Hohlprofil wird aus einem als Strangpreßprofil ausgebildeten Grundprofil hergestellt, in welchem ein vorprofilierter Innensteg oder mehrere vorprofilierte Innenstege in ihrer Länge und Lage derart angeordnet ist bzw. sind, dass dieser bzw. diese beim Aufweiten des Grundprofils im Innenhochdruck-Umformverfahren in eine gestreckte Endstellung überführt wird bzw. werden, um die wenigstens eine Zwischenwand des Hohlprofil zu bilden. Mit einem gemäß diesem bekannten Verfahren hergestellten Hohlprofil sollen in dessen Längsrichtung unterschiedliche Querschnitte realisierbar sein, so dass ein solches Hohlprofil im Bereich von Anbauteilen, wie Türscharnieren, Schlossbolzen oder Gurtbefestigungen eine ausreichende Festigkeit aufweist, ohne dass hierzu nachträglich Verstärkungen erforderlich sein sollen. Das oben genannte Problem tritt jedoch bei diesem bekannten Verfahren nicht auf, da zur Erzeugung des Hohlprofils das Grundprofil gleichmäßig in alle Richtungen so aufgeweitet wird, bis die Innenstege gestreckt sind.

Aufgabe der Erfindung ist es, ein Hohlprofil für eine Trägerstruktur eines Fahrzeugs mit wenigstens einem Innensteg anzugeben, welches unterschiedliche Querschnitte aufweist, wodurch unterschiedliche Eigenschaften für die unterschiedlichen Abschnitte des Hohlprofils realisiert werden können..

Diese Aufgabe wird gelöst durch ein Hohlprofil mit den Merkmalen des Patentanspruchs 1, den Merkmalen des Patentanspruchs 2 und den Merkmalen des Patentanspruchs 10.

Ein solches Hohlprofil für eine Trägerstruktur eines Fahrzeugs mit zumindest einem ersten Abschnitt, der aus einem unverformten Grundprofil gebildet ist, und zumindest einen als Teilsteg mit einem Unterbrechungsabschnitt ausgebildeten und zwischen gegenüberliegenden Stegseitenwänden des Grundprofils verlaufenden Innensteg aufweist, zeichnet sich erfindungsgemäß nach der erstgenannten Lösung durch einen zweiten Abschnitt aus, der aus dem verformten Grundprofil gebildet ist, wobei unter Schließen des Unterbrechungsabschnittes der Teilsteg die gegenüberliegenden Stegseitenwände formschlüssig verbindet.

Dadurch dass durch die Umformung des Grundprofils im zweiten Abschnitt der Unterbrechungsabschnitt des Innensteges ohne Verformung des Teilsteges geschlossen wird und dadurch dieser Teilsteg die beiden Stegseitenwände formschlüssig verbindet, können sich diese beiden Stegseitenwände an diesem Teilsteg als Innensteg abstützen. Insbesondere wird bei einem Krafteintrag in Richtung dieses Innensteges wegen dessen ebener Form gegenüber den Stegseitenwänden eine maximale seitliche Abstützwirkung durch das Hohlprofil im Bereich des umgeformten Abschnittes des Grundprofils erreicht. Die Umformungstiefe in Richtung des Teilsteges entspricht dabei der Länge des Unterbrechungsabschnittes, so dass dadurch von diesem Teilsteg eine Anschlagfunktion ausgeführt wird.

Nach der zweitgenannten Lösung zeichnet sich das Hohlprofil durch einen zweiten Abschnitt aus, der aus dem verformten Grundprofil gebildet ist, wobei durch Umformung der Unterbrechungsabschnitt gegenüber dem unverformten Grundprofil verkürzt ist.

Damit dient dieser Abschnitt des Hohlprofils mit einem reduzierten Unterbrechungsabschnitt für den Abbau von Crashenergie im Falle eines Aufpralls, bei dem die Stegseitenwände bis zum Schließen des Unterbrechungsabschnittes aufeinander zu bewegt werden und dabei Deformationsenergie erzeugt wird.

Eine besonders vorteilhafte Ausgestaltung der Erfindung nach der erstgenannten und zweitgenannten Lösung ergibt sich dadurch, dass der Teilsteg mit wenigstens zwei Teilstegabschnitten ausgebildet ist, wobei der Unterbrechungsabschnitt zwischen den jeweils an einer Stegseitenwand angebundenen Teilstegabschnitten liegt. Durch die Umformung des Grundprofils im zweiten Abschnitt des Hohlprofils stoßen gemäß der erstgenannten Lösung die freien Enden der Teilstegabschnitte aufeinander, so dass hierdurch für die Umformung ebenso eine Anschlagfunktion gegeben ist. Damit wird auch bei einem solchen Teilsteg mit wenigstens zwei Teilstegabschnitten ein von Stegseitenwand zu Stegseitenwand durchgängiger Lastpfad realisiert.

Nach einer weiteren Ausgestaltung der Erfindung gemäß der erstgenannten Lösung ist bzw. sind das freie Ende des Teilsteges bzw. die freien Enden der Teilstegabschnitte mit einem Flansch ausgebildet. Damit wird zum einen ein sicheres Schließen des Unterbrechungsabschnittes sichergestellt und zum anderen auch der Kraftschluss verbessert. Vorzugsweise ist der Flansch derart ausgebildet, dass dieser mit dem freien Ende des Teilsteges bzw. des Teilstegabschnittes eine L-Form oder eine T-Form bildet.

Zur Verbesserung des Kraftschlusses ist weiterbildungsgemäß vorgesehen, dass das freie Ende des Teilsteges im Bereich des umgeformten Abschnittes des Grundprofils mit der gegenüberliegenden Stegseitenwand kraft- oder formschlüssig verbunden ist, bzw. die freien Enden der Teilstegabschnitte im Bereich des umgeformten Abschnittes des Grundprofils kraft- oder formschlüssig verbunden sind.

Des Weiteren ist nach einer anderen Ausgestaltung der Erfindung nach der erstgenannten Lösung zur Überbrückung des reduzierten Unterbrechungsabschnittes ein Überbrückungselement vorgesehen, welches mit den freien Enden der Teilstegabschnitte kraft- oder formschlüssig verbunden ist. Damit ergibt sich ein unterbrechungsfreier Innensteg, der die beiden gegenüberliegenden Stegseitenwände kraft- oder formschlüssig verbindet.

Schließlich zeichnet sich nach der drittgenannten Lösung das Hohlprofil für eine Trägerstruktur eines Fahrzeugs mit zumindest einem ersten Abschnitt, der aus einem unverformten Grundprofil gebildet ist, und zumindest einen als Teilsteg mit einem Unterbrechungsabschnitt ausgebildeten und zwischen gegenüberliegenden Stegseitenwänden des Grundprofils verlaufenden Innensteg aufweist, erfindungsgemäß dadurch aus, dass der Unterbrechungsabschnitt ein Sollbruchabschnitt ist und das Hohlprofil einen zweiten Abschnitt aufweist, der aus dem verformten Grundprofil gebildet ist, wobei der Teilsteg aufgrund eines durch eine Umformung des Grundprofils erzeugten Bruchs des Sollbruchabschnittes der Teilsteg die gegenüberliegenden Stegseitenwände formschlüssig verbindet.

Auch bei dieser drittgenannten Lösung wird erreicht, dass nach der Umformung des Grundprofils im zweiten Abschnitt eine durch den Teilsteg erzeugter durchgängiger Lastpfad zwischen den beiden Stegseitenwänden entsteht, so dass eine maximale seitliche Abstützwirkung im Bereich des Abschnittes erzeugt wird.

Nach einer vorteilhaften Ausgestaltung der Erfindung gemäß der drittgenannten Lösung ist der Teilsteg mit wenigstens zwei Teilstegabschnitten ausgebildet, wobei der Sollbruchabschnitt zwischen den jeweils an einer Stegseitenwand angebundenen Teilstegabschnitten liegt.

Die Erfindung wird nachfolgend anhand von Ausführungsbeispielen unter Bezugnahme auf die beigefügten Figuren ausführlich beschrieben. Es zeigen:
- Figur 1: eine schematische Darstellung eines erfindungsgemäßen Hohlprofils in einer Draufsicht,
- Figuren 2: Schnittdarstellungen eines ersten Ausführungsbeispiels gemäß Schnitt I-I und Schnitt II-II nach Figur 1,
- Figuren 3: Schnittdarstellungen eines zweiten Ausführungsbeispiels gemäß Schnitt I-I und Schnitt II-II nach Figur 1,
- Figuren 4: Schnittdarstellungen eines dritten Ausführungsbeispiels gemäß Schnitt I-I und Schnitt II-II nach Figur 1,
- Figuren 5: Schnittdarstellungen eines vierten Ausführungsbeispiels gemäß Schnitt I-I und Schnitt II-II nach Figur 1,
- Figuren 6: Schnittdarstellungen eines fünften Ausführungsbeispiels gemäß Schnitt I-I und Schnitt II-II nach Figur 1,
- Figuren 7: Schnittdarstellungen eines sechsten Ausführungsbeispiels gemäß Schnitt I-I und Schnitt II-II nach Figur 1,
- Figuren 8: Schnittdarstellungen eines siebten Ausführungsbeispiels gemäß Schnitt I-I und Schnitt II-II nach Figur 1,
- Figur 9: eine Schnittdarstellung eines Grundprofils gemäß Stand der Technik, und
- Figur 10: eine Schnittdarstellung des aus dem Grundprofil nach Figur 4 durch Umformung erzeugten Hohlprofils.

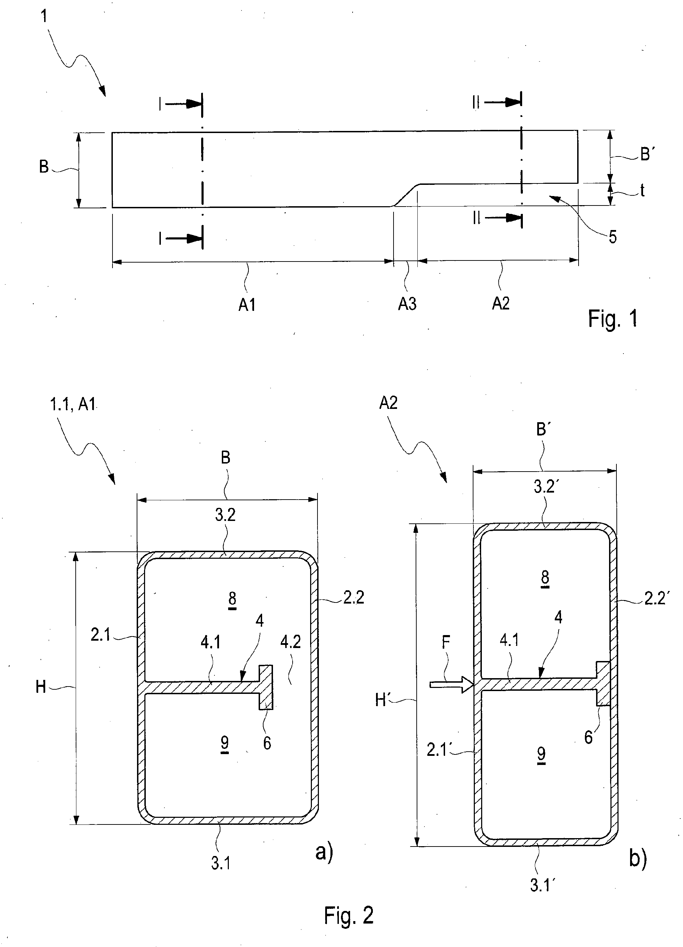

Figur 1 zeigt ein erfindungsgemäß aus einem Grundprofil 1.1 mit einem Querschnitt gemäß den Figuren 2a), 3a), 4a), 5a), 6a), 7a) und 8a) hergestelltes Hohlprofil 1 als Längsträger für eine Fahrzeugkarosserie mit mehreren Abschnitten A1, A2 und A3, wobei Abschnitt A1 diesem Grundprofil 1.1 entspricht, also nicht umgeformt ist und Abschnitt A2 nach der Umformung mit einer Verprägung 5 den in den Figuren 2b), 3b), 4b), 5b), 6b), 7b) und 8b) dargestellten Querschnitt aufweist. Den Übergang von Abschnitt A1 zu Abschnitt A2 bildet ein Übergangsabschnitt A3.

Der durch Umformung hergestellte Abschnitt A2 des Hohlprofils 1 weist gegenüber dem Abschnitt A1 eine Querschnittsänderung auf, bei der gemäß Figur 1 die Breite B des Abschnittes A1 einseitig durch die Verprägung 5 auf eine Breite B' des Abschnittes A2 des Hohlprofils 1 reduziert ist.

Der Querschnitt des Grundprofils 1.1 gemäß den Figuren 2a), 3a), 4a), 5a), 6a), 7a) und 8a) ist im Wesentlichen rechteckförmig mit zwei gegenüberliegenden Stegseitenwände 2.1 und 2.2 sowie zwei weiteren gegenüberliegenden Seitenwänden 3.1 und 3.2 ausgebildet. Der Querschnitt dieses Grundprofils 1.1 wird von einem Innensteg 4 geteilt, so dass zwei Kammern 8 und 9 entstehen.

Der Innensteg 4 des Hohlprofils 1.1 ist entsprechend den Ausführungsbeispielen nach den Figuren 2 bis 8 unterschiedlich ausgebildet, wobei die Gemeinsamkeit darin besteht, dass jeder dieser Innenstege 4 aus einem Teilsteg 4.1 und einem Unterbrechungsabschnitt 4.2 besteht, so dass ein unterbrochener Innensteg 4 entsteht, der aufgrund der Unterbrechung die beiden Stegseitenwände 2.1 und 2.2 des Grundprofils 1.1 nicht formschlüssig verbindet. Erst mit der Umformung des Grundprofils 1.1 in das Hohlprofil 1 entsteht ein Abschnitt A2, bei dem der Unterbrechungsabschnitt 4.2 geschlossen ist, so dass nunmehr eine formschlüssige Verbindung zwischen den beiden Stegseitenwänden 2.1 und 2.2 entsteht. Durch die Verprägung 5 entsteht im Bereich des Abschnittes A2 ein rechteckförmiger Querschnitt mit den Stegseitenwände 2.1' und 2.2' sowie den Seitenwänden 3.1' und 3.2'.

Der Unterbrechungsabschnitt 4.2 hat eine Weite w, die einer Umformungstiefe, also einer Verprägungstiefe t der Verprägung 5 entspricht, so dass die beiden Stegseitenwände 2.1 und 2.2 bei der Umformung im Bereich des Abschnittes A1 entsprechend dieser Verprägungstiefe t aufeinander zu bewegt werden und sich dabei der Unterbrechungsabschnitt 4.2 schließt.

Mit der Verringerung der Breite B des Grundprofils 1.1 auf die Breite B' des Abschnittes A2 wird die Höhe H des Grundprofils 1.1 auf eine Höhe H' des Abschnittes A2 erhöht. Die Umformung kann derart ausgeführt werden, dass der Querschnitt im Bereich des Abschnittes A2 kleiner ist gegenüber dem Querschnitt im Bereich des Abschnittes A1 des Hohlprofils 1.

Demgegenüber kann das Grundprofil 1.1 derart umgeformt werden, dass sich nur die Querschnittsform des Grundprofils 1.1 ändert, jedoch nicht der durch die Stegseitenwände 2.1 und 2.2 sowie der Seitenwände 3.1 und 3.2 gegebene Umfang. Dadurch ändern sich deren Wandstärken durch die Umformung nicht, so dass die Steifigkeit des Grundprofils 1.1 bei der Umformung in das Hohlprofil 1 erhalten bleibt. Insbesondere wird bei einem Krafteintrag F in Richtung des Innensteges 4 im Bereich des Abschnittes A2 wegen der formschlüssigen Verbindung der beiden Stegseitenwände 2.1' und 2.2' eine maximale seitliche Abstützwirkung durch das Hohlprofil 1 entlang der gesamten Länge des Abschnittes A2 erreicht.

Gemäß Figur 2a) ist der Innensteg 4 des Grundprofils 1.1 als Teilsteg 4.1 mit einer gegenüber dem Abstand der beiden Stegseitenwände 2.1 und 2.2 verkürzten Breite ausgebildet, so dass zwischen einem Ende dieses Teilsteges 4.1 und der gegenüberliegenden Stegseitenwand 2.2 der Unterbrechungsabschnitt 4.2 gebildet wird. Das Ende dieses Teilsteges 4.1 ist mit einem Flansch 6 ausgebildet, der zusammen mit diesem Teilsteg 4.1 eine T-Form bildet. Nach der Umformung des Grundprofils 1.1 in das Hohlprofil 1 mit dem Abschnitt A2 ist unter Anlage des Flansches 6 an der Stegseitenwand 2.2' der Unterbrechungsabschnitt 4.2 geschlossen (vgl. Figur 2b). Der Flansch 6 kann kraft- oder stoffschlüssig, bspw. mit einer Schraub- oder Schweißverbindung mit der Stegseitenwand 2.2' verbunden werden.

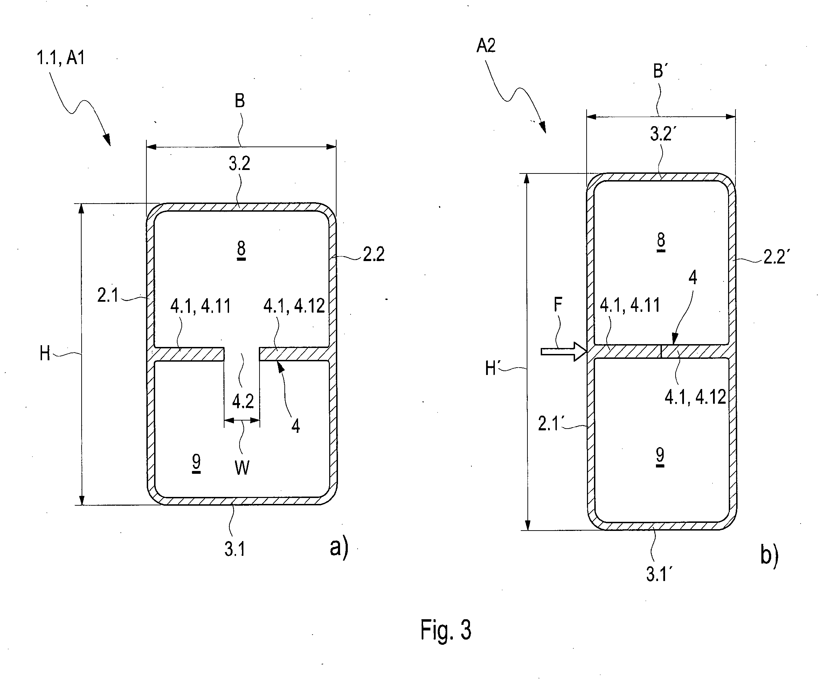

Nach Figur 3a) besteht der Teilsteg 4.1 des Grundprofils 1.1 aus zwei Teilstegabschnitten 4.11 und 4.12, die jeweils an einer Stegseitenwand 2.1 und 2.2 angebunden sind, so dass zwischen deren freien Enden ein Unterbrechungsabschnitt 4.2 gebildet wird. Nach der Umformung des Grundprofils 1.1 in den Abschnitt A2 liegen die freien Enden der beiden Teilstegabschnitte 4.11 und 4.12 gemäß Figur 3b) formschlüssig aneinander, so dass ein durchgängiger Lastpfad zwischen den beiden Stegseitenwände 2.1' und 2.2' gebildet wird. Die beiden aneinander liegenden Enden der beiden Teilstegabschnitte 4.11 und 4.12 können durch Schweißen oder durch Reibrührschweißen miteinander verbunden werden.

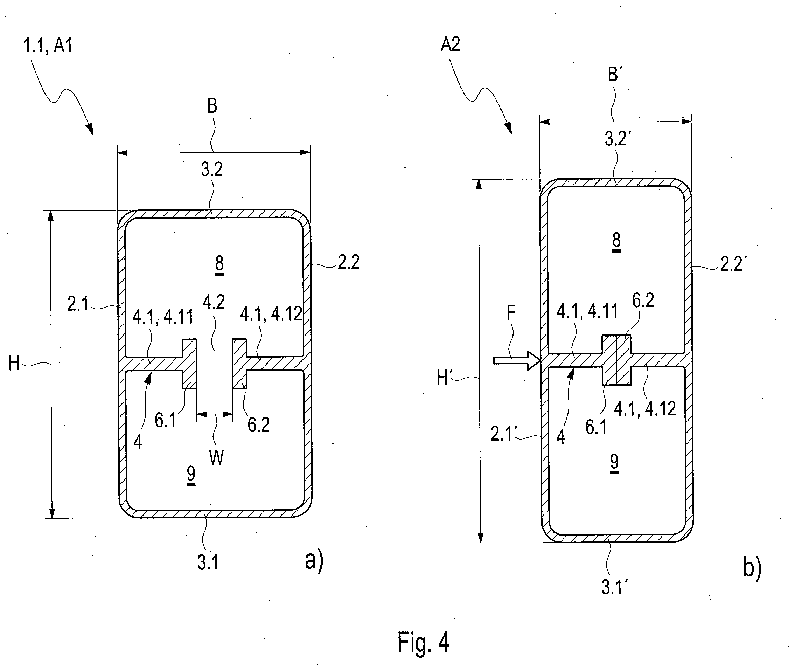

Auch der Teilsteg 4.1 des Hohlprofils 1.1 nach Figur 4a) weist zwei Teilstegabschnitte 4.11 und 4.12 auf, die jedoch im Unterschied zu denjenigen nach Figur 3 a) jeweils einen Flansch 6.1 und 6.2 aufweisen, die mit einem Teilstegabschnitt 4.11 bzw. 4.12 eine T-Form bilden. Nach der Umformung des Grundprofils 1.1 in den Abschnitt A2 des Hohlprofils 1 liegen die beiden Flansche 6.1 und 6.2 gemäß Figur 4b) formschlüssig aneinander. Auch hier können die beiden aneinander liegenden Flansche 6.1 und 6.2 durch Schweißen oder durch Reibrührschweißen miteinander verbunden werden.

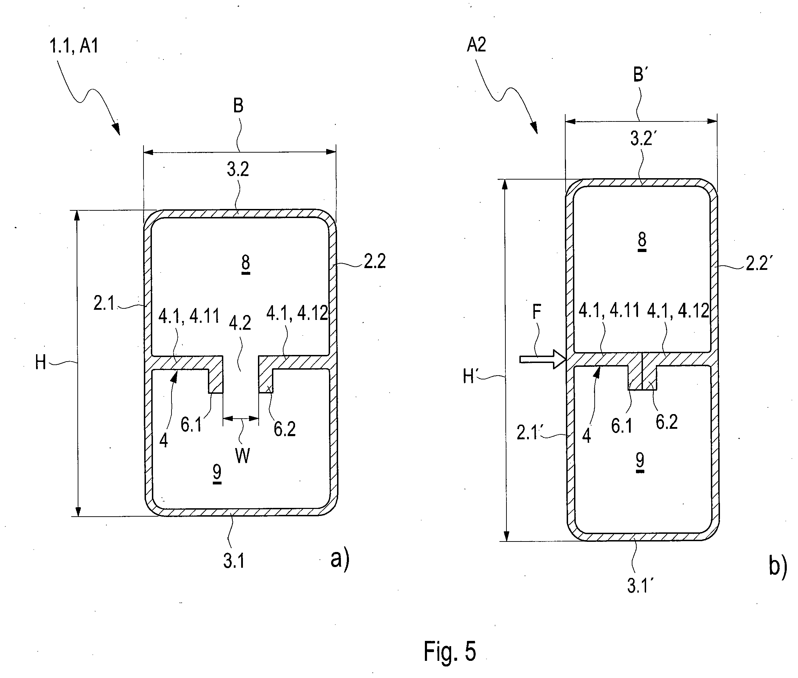

Das Grundprofil 1.1 nach Figur 5a) umfasst ebenso wie das Grundprofil 1.1 nach Figur 4a) einen Teilsteg 4.1 mit zwei Teilstegabschnitten 4.11 und 4.12, deren Enden jeweils einen Flansch 6.1 und 6.2 aufweisen. Der Unterschied besteht jedoch darin, dass die beiden Flansche 6.1 und 6.2 gemäß Figur 5a) derart ausgebildet sind, dass sie mit den Enden der beiden Teilstegabschnitte 4.11 und 4.12 eine L-Form bilden. Nach der Umformung des Grundprofils 1.1 in den Abschnitt A2 des Hohlprofils 1 liegen die beiden Flansche 6.1 und 6.2 gemäß Figur 5b) formschlüssig aneinander. Auch hier können die beiden aneinander liegenden Flansche 6.1 und 6.2 durch Schweißen oder durch Reibrührschweißen miteinander verbunden werden.

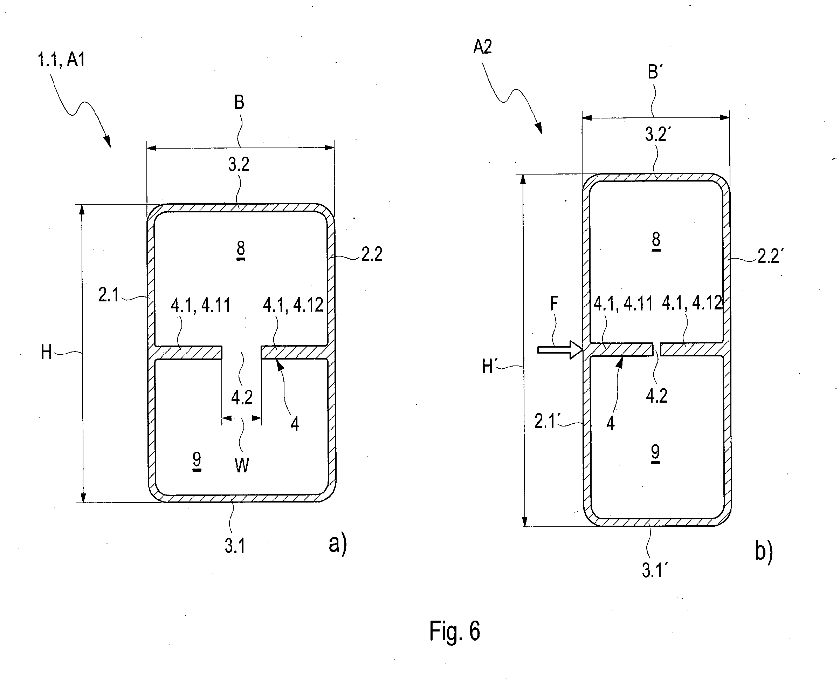

Bei dem Ausführungsbeispiel gemäß Figur 6 weist das Grundprofil 1.1 nach Figur 6a) einen Innensteg 4 auf, dessen Teilsteg 4.1 entsprechend desjenigen nach Figur 3a) aus zwei Teilstegabschnitten 4.11 und 4.12 und einem dazwischen liegenden Unterbrechungsabschnitt 4.2 besteht, jedoch die Umformung in den Abschnitt A2 derart durchgeführt wird, dass die Verprägungstiefe t geringer ist als die Weite w des Unterbrechungsabschnittes 4.2 und daher nach der Verformung gemäß Figur 6b) eine Lücke 4.2' zwischen den beiden Enden der Teilstegabschnitte 4.11 und 4.12 verbleibt.

Dies führt zu dem Vorteil, dass bei einem Aufprall mit einem Krafteintrag in Richtung des Innensteges durch Deformation des Abschnittes A2 Crashenergie abgebaut werden kann, bis diese Lücke 4.2' geschlossen ist, also die beiden Teilstegabschnitte 4.11 und 4.12 aneinander stoßen.

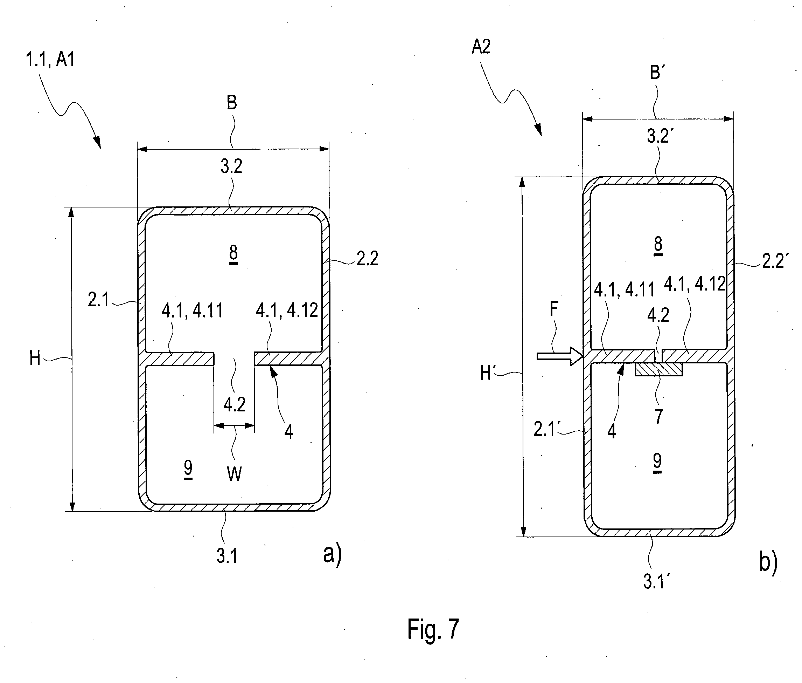

Das Grundprofil 1.1 gemäß Figur 7a) ist mit einem Innensteg 4 entsprechend demjenigen nach Figur 6a) ausgebildet. Der Unterschied besteht darin, dass gemäß Figur 7b) die Lücke 4.2' nach der Umformung in den Abschnitt A2 des Hohlprofils 1 mittels eines Überbrückungselementes 7 überbrückt wird, indem die beiden Enden der Teilstegabschnitte 4.11 und 4.12 mit diesem Überbrückungselement 7 kraft- oder stoffschlüssig, bspw. mittels Schweißen oder Reibrührschweißen verbunden werden. Dadurch können sich diese beiden Stegseitenwände 2.1' und 2.2' an den mittels des Überbrückungselementes 7 verbundenen Teilstegabschnitte 4.11 und 4.12 als Innensteg 4 abstützen. Insbesondere wird bei einem Krafteintrag in Richtung dieses Innensteges 4 wegen der durchgehenden Verbindung der beiden Stegseitenwänden 2.1' und 2.2' eine maximale seitliche Abstützwirkung durch das Hohlprofil 1 im Bereich des umgeformten Abschnittes A2 des Grundprofils 1.1 erreicht.

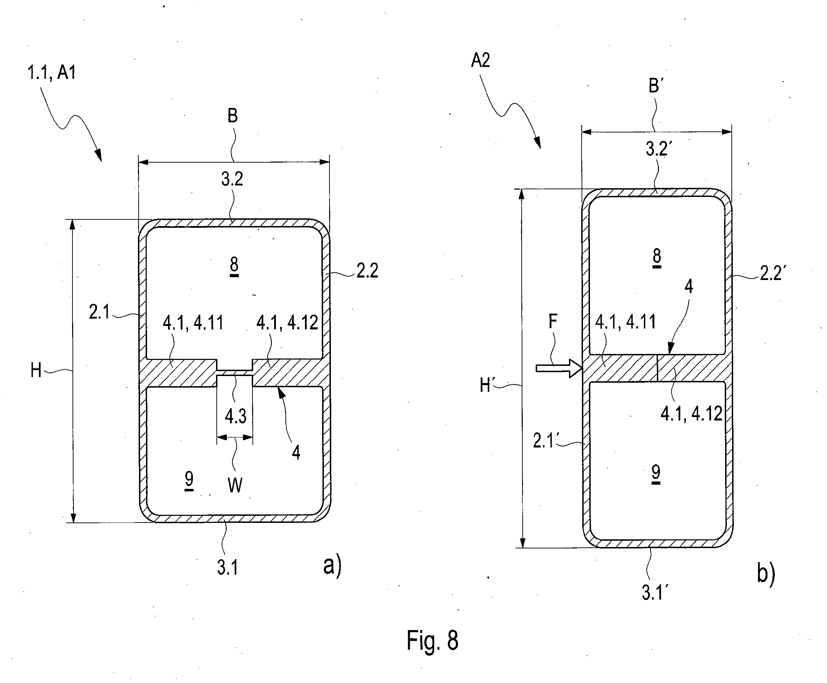

Mit Figur 8 wird ein Ausführungsbeispiel gezeigt, bei dem das Grundprofil 1.1 gemäß Figur 8a) einen Innensteg 4 aufweist, dessen Teilsteg 4.1 aus zwei jeweils mit einer Stegseitenwand 2.1 bzw. 2.2 verbundenen Teilstegabschnitte 4.11 und 4.12 besteht, wobei die freien Enden dieser beiden Teilstegabschnitte 4.11 und 4.12 über einen Sollbruchabschnitt 4.3 verbunden sind. Dieser Sollbruchabschnitt 4.3 wird dadurch realisiert, dass dessen Wandstärke wesentlich geringer ausgeführt ist als die Wandstärke der beiden Teilstegabschnitte 4.11 und 4.12. Mit der Umformung des Grundprofils 1.1 in den Abschnitt A2 des Hohlprofils 1 wird dieser Sollbruchabschnitt 4.3 aufgebrochen, so dass nach der Umformung die beiden freien Enden der Teilstegabschnitte 4.11 und 4.12 flächenschlüssig aneinander anstoßen. Dabei entspricht die Verprägungstiefe t im Bereich des Abschnittes A2 der Breite w dieses Sollbruchabschnittes 4.3.

Den Ausführungsbeispielen gemäß den Figuren 2 bis 5 und 8 ist gemeinsam, dass durch die Umformung des Abschnittes A2 des Grundprofils 1.1 der Unterbrechungsabschnitt 4.2 bzw. der Sollbruchabschnitt 4.3 des Innensteges 4 ohne Verformung des Teilsteges 4.1 bzw. dessen Teilstegabschnitte 4.11 und 4.12 geschlossen bzw. beseitigt wird und dadurch dieser Teilsteg 4.1 die beiden Stegseitenwände 2.1' und 2.2' im Bereich des Abschnittes A2 kraftschlüssig verbindet. Dadurch können sich diese beiden Stegseitenwände 2.1' und 2.2' an diesem Teilsteg 4.1 bzw. dessen Teilstegabschnitte 4.1.1 und 4.12 als Innensteg 4 abstützen. Insbesondere wird bei einem Krafteintrag in Richtung dieses Innensteges 4 wegen dessen ebener Fläche gegenüber den Stegseitenwänden 2.1' und 2.2' eine maximale seitliche Abstützwirkung durch das Hohlprofil 1 im Bereich des umgeformten Abschnittes A2 des Grundprofils 1.1 erreicht. Da die Umformungstiefe t in Richtung des Teilsteges 4.1 der Breite w des Unterbrechungsabschnittes 4.2 spricht, wird von diesem Teilsteg 4.1 bzw. dessen Teilstegabschnitte 4.11 und 4.12 eine Anschlagfunktion realisiert.

Die Umformung des Grundprofils 1.1 in das Hohlprofil 1 erfolgt mittels eines Innenhochdruckumformprozesses, wobei als Material für die Herstellung des Grundprofils 1.1 Leichtmetall, wie beispielsweise Aluminium oder Magnesium, als auch Stahl verwendet werden kann.

Das Grundprofil 1.1 kann als Strangpreßprofil mit einem üblichen durchgehenden Innensteg hergestellt werden, wobei hieraus der Teilsteg durch Schlitzen des durchgehenden Innensteges hergestellt wird.

### Bezugszeichen

- 1: Hohlprofil
- 1.1: Grundprofil
- 2.1: Stegseitenwand des Grundprofils 1.1
- 2.1': Stegseitenwand des Abschnittes A2
- 2.2: Stegseitenwand des Grundprofils 1.1
- 2.2': Stegseitenwand des Abschnittes A2
- 3.1: Seitenwand des Grundprofils 1.1
- 3.1': Seitenwand des Abschnittes A2
- 3.2: Seitenwand des Grundprofils 1.1
- 3.2': Seitenwand des Abschnittes A2
- 4: Innensteg des Grundprofils 1.1
- 4.1: Teilsteg des Innensteges 4
- 4.11: Teilstegabschnitt des Teilsteges 4.1
- 4.12: Teilstegabschnitt des Teilsteges 4.1
- 4.2: Unterbrechungsabschnitt des Innensteges 4
- 4.2': Lücke
- 4.3: Sollbruchabschnitt
- 5: Verprägung
- 6: Flansch des Teilsteges 4.1
- 6.1: Flansch des Teilstegabschnittes 4.11
- 6.2: Flansch des Teilstegabschnittes 4.12
- 7: Überbrückungselement
- 8: Kammer des Hohlprofils 1
- 9: Kammer des Hohlprofils 1

- 10: Grundprofil gemäß Stand der Technik
- 11: Seitenwände des Grundprofils 10
- 12: Seitenwände des Grundprofils 10
- 13: Innensteg des Grundprofils 10
- A1: Abschnitt des Hohlprofils 1
- A2: Abschnitt des Hohlprofils 1
- A3: Übergangsabschnitt des Hohlprofils 1

## Patentansprüche

1. Hohlprofil (1) für eine Trägerstruktur eines Fahrzeugs mit zumindest
- einem ersten Abschnitt (A1), der
- aus einem unverformten Grundprofil (1.1) gebildet ist, und
- zumindest einen als Teilsteg (4.1) mit einem Unterbrechungsabschnitt (4.2) ausgebildeten und zwischen gegenüberliegenden Stegseitenwänden (2.1, 2.2) des Grundprofils (1.1) verlaufenden Innensteg (4) aufweist,
**gekennzeichnet durch**
- einen zweiten Abschnitt (A2), der aus dem verformten Grundprofil (1.1) gebildet ist, wobei unter Schließen des Unterbrechungsabschnittes (4.2) der Teilsteg (4.1) die gegenüberliegenden Stegseitenwände (2.1', 2.2') formschlüssig verbindet.

2. Hohlprofil (1) für eine Trägerstruktur eines Fahrzeugs mit zumindest
- einem ersten Abschnitt (A1), der
- aus einem unverformten Grundprofil (1.1) gebildet ist, und
- zumindest einen als Teilsteg (4.1) mit einem Unterbrechungsabschnitt (4.2) ausgebildeten und zwischen gegenüberliegenden Stegseitenwänden (2.1, 2.2) des Grundprofils (1.1) verlaufenden Innensteg (4) aufweist,
**gekennzeichnet durch**
- einen zweiten Abschnitt (A2), der aus dem verformten Grundprofil (1.1) gebildet ist, wobei durch Umformung der Unterbrechungsabschnitt (4.2) gegenüber dem unverformten Grundprofil (1.1) verkürzt ist.

3. Hohlprofil (1) nach Anspruch 1 oder 2,
**dadurch gekennzeichnet, dass** im ersten Abschnitt (A1) der Teilsteg (4.1) mit wenigstens zwei Teilstegabschnitten (4.11, 4.12) ausgebildet ist, wobei der Unterbrechungsabschnitt (4.2) zwischen den jeweils an einer Stegseitenwand (2.1, 2.2) angebundenen Teilstegabschnitten (4.11, 4.12) liegt.

4. Hohlprofil (1) nach Anspruch 1 ,
**dadurch gekennzeichnet, dass** das freie Ende des Teilsteges (4.1) bzw. die freien Enden der Teilstegabschnitte (4.11, 4.12) mit einem Flansch (6, 6.1, 6.2) ausgebildet ist bzw. sind.

5. Hohlprofil (1) nach Anspruch 4,
**dadurch gekennzeichnet, dass** der Flansch (6, 6.1, 6.2) mit dem freien Ende des Teilsteges (4.1) bzw. des Teilstegabschnittes (4.11, 4.12) eine L-Form oder eine T-Form zu bildet.

6. Hohlprofil (1) nach einem der vorhergehenden Ansprüche,
**dadurch gekennzeichnet, dass** das freie Ende des Teilsteges (4.1) im Bereich des zweiten Abschnittes (A2) mit der gegenüberliegenden Stegseitenwand (2.1, 2.2) kraft- oder formschlüssig verbunden ist.

7. Hohlprofil (1) nach Anspruch 3 ,
**dadurch gekennzeichnet, dass** die freien Enden der Teilstegabschnitte (4.11, 4.12) im Bereich des zweiten Abschnittes (A2) kraft- oder formschlüssig verbunden sind.

8. Hohlprofil (1) nach Anspruch 7,
**dadurch gekennzeichnet, dass** der Teilsteg (4.1) mit wenigstens zwei Teilstegabschnitten (4.11, 4.12) ausgebildet ist, wobei der Unterbrechungsabschnitt (4.2) zwischen den jeweils an einer Stegseitenwand (2.1, 2.2) angebundenen Teilstegabschnitten (4.11, 4.12) liegt.

9. Hohlprofil (1) nach Anspruch 8,
**dadurch gekennzeichnet, dass** zur Überbrückung des Unterbrechungsabschnittes (4.2) im zweiten Abschnitt (A2) ein Überbrückungselement (7) vorgesehen ist, welches mit den freien Enden der Teilstegabschnitte (4.11, 4.12) kraft- oder formschlüssig verbunden ist.

10. Hohlprofil (1) für eine Trägerstruktur eines Fahrzeugs mit zumindest,
- einem ersten Abschnitt (A1), der
- aus einem unverformten Grundprofil (1.1) gebildet ist, und
- zumindest einen als Teilsteg (4.1) mit einem Unterbrechungsabschnitt ausgebildeten und zwischen gegenüberliegenden Stegseitenwänden (2.1, 2.2) des Grundprofils (1.1) verlaufenden Innensteg (4) aufweist,
**dadurch gekennzeichnet, dass**
- der Unterbrechungsabschnitt ein Sollbruchabschnitt (4.3) ist, und
- das Hohlprofil (1) einen zweiten Abschnitt (A2) aufweist, der aus dem verformten Grundprofil (1.1) gebildet ist, wobei der Teilsteg (4.1) aufgrund eines durch eine Umformung des Grundprofils (1.1) erzeugten Bruchs des Sollbruchabschnittes (4.3) der Teilsteg (4.1) die gegenüberliegenden Stegseitenwände (2.1', 2.2') formschlüssig verbindet.

11. Hohlprofil (1) nach Anspruch 10,
**dadurch gekennzeichnet, dass** der Teilsteg (4.1) mit wenigstens zwei Teilstegabschnitten (4.11, 4.12) ausgebildet ist, wobei im ersten Abschnitt (A1) der Sollbruchabschnitt (4.3) zwischen den jeweils an einer Stegseitenwand (2.1, 2.2) angebundenen Teilstegabschnitten (4.11, 4.12) liegt.

## Claims

1. Hollow profile (1) for a support structure of a vehicle with at least
- one first section (A1), which
- is formed from an undeformed basic profile (1.1), and
- has at least one inner crosspiece (4) formed as partial crosspiece (4.1) with an interruption section (4.2) and extending between oppositely situated crosspiece side walls (2.1, 2.2) of the basic profile (1.1), **characterised by**
- a second section (A2) which is formed from the deformed basic profile (1.1), wherein when the interruption section (4.2) is closed the partial crosspiece (4.1) connects the oppositely situated crosspiece side walls (2.1', 2.2') in a form-locking manner.

2. Hollow profile (1) for a support structure of the vehicle with at least
- one first section (A1), which
- is formed from an undeformed basic profile (1.1), and
- has at least one inner crosspiece (4) formed as partial crosspiece (4.1) with an interruption section (4.2) and extending between oppositely situated crosspiece side walls (2.1, 2.2) of the basic profile (1.1), **characterised by**
- a second section (A2) which is formed from the deformed basic profile (1.1), wherein the interruption section (4.2) is shortened by deformation with respect to the undeformed profile (1.1)

3. Hollow profile (1) according to claim 1 or 2, **characterised in that** in the first section (A1) the partial crosspiece (4.1) is formed with at least two partial crosspiece sections (4.11, 4.12), wherein the interruption section (4.2) lies between the partial crosspiece sections (4.11, 4.12) which are connected in each case to a crosspiece side wall (2.1, 2.2).

4. Hollow profile (1) according to claim 1, **characterised in that** the free end of the partial crosspiece (4.1) or the free ends of the partial crosspiece sections (4.11, 4.12) is or are formed with a flange (6, 6.1, 6.2).

5. Hollow profile (1) according to claim 4, **characterised in that** the flange (6, 6.1, 6.2) forms with the free end of the partial crosspiece (4.1) or of the partial crosspiece section (4.11, 4.12) an L shape or a T shape.

6. Hollow profile (1) according to one of the preceding claims, **characterised in that** the free end of the partial crosspiece (4.1) in the region of the second section (A2) is connected in a force-fitting or form-fitting manner with the oppositely situated crosspiece sidewall (2.1, 2.2).

7. Hollow profile (1) according to claim 3, **characterised in that** the free ends of the partial crosspiece sections (4.11, 4.12) in the region of the second section (A2) are connected in a force-fitting or form-fitting manner.

8. Hollow profile (1) according to claim 7, **characterised in that** the partial crosspiece (4.1) is formed with at least two partial crosspiece sections (4.11, 4.12), wherein the interruption section (4.2) lies between the partial crosspiece sections (4.11, 4.12) connected in each case to a crosspiece sidewall (2.1, 2.2).

9. Hollow profile (1) according to claim 8, **characterised in that** for bridging the interruption section (4.2) in the second section (A2) a bridging element (7) is provided which is connected with the free ends of the partial crosspiece sections (4.11, 4.12) in a force-fitting or form-fitting manner.

10. Hollow profile (1) for a support structure of a vehicle with at least
- one first section (A1), which
- is formed from an undeformed basic profile (1.1), and
- has at least one inner crosspiece (4) formed as partial crosspiece (4.1) with an interruption section and extending between oppositely situated crosspiece side walls (2.1, 2.2) of the basic profile (1.1), **characterised in that**
- the interruption section is a break-off section (4.3), and
- the hollow profile (1) has a second section (A2) which is formed from the undeformed basic profile (1.1), wherein the partial crosspiece (4.1), as a result of a break of the break-off section (4.3) caused by a deformation of the basic profile (1.1), the partial crosspiece (4.1) connects the oppositely situated crosspiece side walls (2.1', 2.2') in a form-fitting manner.

11. Hollow profile (1) according to claim 10, **characterised in that** the partial crosspiece (4.1) is formed with at least two partial crosspiece sections (4.11, 4.12), wherein in the first section (A1) the break-off section (4.3) lies between the partial crosspiece sections (4.11, 4.12) which are each connected to a crosspiece side wall (2.1, 2.2).

## Revendications

1. Profilé creux (1) pour une structure porteuse d'un véhicule avec au moins
- une première section (A1), qui
- est formée d'un profilé de base (1.1) non déformé, et
- présente au moins une nervure intérieure (4) réalisée en tant que nervure partielle (4.1) avec une section d'interruption (4.2) et s'étendant entre des parois latérales de nervure (2.1, 2.2) opposées du profilé de base (1.1),
**caractérisé par**
- une seconde section (A2) qui est formée du profilé de base (1.1) déformé, dans lequel par la fermeture de la section d'interruption (4.2) la nervure partielle (4.1) raccorde par complémentarité de formes les parois latérales de nervure (2.1', 2.2') opposées.

2. Profilé creux (1) pour une structure porteuse d'un véhicule avec au moins
- une première section (A1), qui
- est formée d'un profilé de base (1.1) non déformé, et
- présente au moins une nervure intérieure (4) réalisée en tant que nervure partielle (4.1) avec une section d'interruption (4.2) et s'étendant entre des parois latérales de nervure (2.1, 2.2) opposées du profilé de base (1.1),
**caractérisé par**
- une seconde section (A2) qui est formée du profilé de base (1.1) déformé, dans lequel par déformation la section d'interruption (4.2) est raccourcie par rapport au profilé de base (1.1) non déformé.

3. Profilé creux (1) selon la revendication 1 ou 2,
**caractérisé en ce que** dans la première section (A1) la nervure partielle (4.1) est réalisée avec au moins deux sections de nervure partielle (4.11, 4.12), dans lequel la section d'interruption (4.2) se trouve entre les sections de nervure partielle (4.11, 4.12) liées respectivement à une paroi latérale de nervure (2.1, 2.2).

4. Profilé creux (1) selon la revendication 1,
**caractérisé en ce que** l'extrémité libre de la nervure partielle (4.1) ou les extrémités libres des sections de nervure partielle (4.11, 4.12) est ou sont réalisée(s) avec une bride (6, 6.1, 6.2).

5. Profilé creux (1) selon la revendication 4,
**caractérisé en ce que** la bride (6, 6.1, 6.2) réalise avec l'extrémité libre de la nervure partielle (4.1) ou de la section de nervure partielle (4.11, 4.12) une forme de L ou une forme de T.

6. Profilé creux (1) selon l'une quelconque des revendications précédentes,
**caractérisé en ce que** l'extrémité libre de la nervure partielle (4.1) est raccordée à force ou à complémentarité de formes dans la zone de la seconde section (A2) avec la paroi latérale de nervure (2.1, 2.2) opposée.

7. Profilé creux (1) selon la revendication 3,
**caractérisé en ce que** les extrémités libres des sections de nervure partielle (4.11, 4.12) sont raccordées à force ou à complémentarité de formes dans la zone de la seconde section (A2).

8. Profilé creux (1) selon la revendication 7,
**caractérisé en ce que** la nervure partielle (4.1) est réalisée avec au moins deux sections de nervure partielle (4.11, 4.12), dans lequel la section d'interruption (4.2) se trouve entre les sections de nervure partielle (4.11, 4.12) liées respectivement à une paroi latérale de nervure (2.1, 2.2).

9. Profilé creux (1) selon la revendication 8,
**caractérisé en ce qu'**un élément de recouvrement (7) est prévu pour le recouvrement de la section d'interruption (4.2) dans la seconde section (A2), lequel est raccordé à force ou à complémentarité de formes aux extrémités libres des sections de nervure partielle (4.11, 4.12).

10. Profilé creux (1) pour une structure porteuse d'un véhicule avec au moins
- une première section (A1), qui
- est formée d'un profilé de base (1.1) non déformé, et
- présente au moins une nervure intérieure (4) réalisée en tant que nervure partielle (4.1) avec une section d'interruption et s'étendant entre des parois latérales de nervure (2.1, 2.2) opposées du profilé de base (1.1),
**caractérisé en ce que**
- la section d'interruption est une section destinée à la rupture (4.3), et
- le profilé creux (1) présente une seconde section (A2) qui est formée du profilé de base (1.1) déformé, dans lequel la nervure partielle (4.1) raccorde par complémentarité de formes les parois latérales de nervure (2.1', 2.2') opposées en raison d'une rupture de la section destinée à la rupture (4.3) de la nervure partielle (4.1), générée par une déformation du profilé de base (1.1).

11. Profilé creux (1) selon la revendication 10,
**caractérisé en ce que** la nervure partielle (4.1) est réalisée avec au moins deux sections de nervure partielle (4.11, 4.12), dans lequel dans la première section (A1) la section destinée à la rupture (4.3) se trouve entre les sections de nervure partielle (4.11, 4.12) liées respectivement à une paroi latérale de nervure (2.1, 2.2).
